# EUROPÄISCHE PATENTSCHRIFT

(11) **EP 2 774 466 B1**
(45) Veröffentlichungstag und Bekanntmachung des Hinweises auf die Patenterteilung: **07.09.2016**
(21) Anmeldenummer: 14169998.3
(22) Anmeldetag: 13.04.2012
(51) Int. Cl.: A01C 7/06, A01C 7/08

(54) **Reihensämaschine**
Row sowing machine
Semoir

(30) Priorität: 21.04.2011 DE 102011018447
(43) Veröffentlichungstag der Anmeldung: 10.09.2014
(62) Teilanmeldung aus: 12002614.1
(73) Patentinhaber: PÖTTINGER Landtechnik GmbH, 4710 Grieskirchen (AT)
(72) Erfinder: Preimess, Hans-Jörg, 9811 Lendorf (AT)
(74) Vertreter: Thoma, Michael

(56) Entgegenhaltungen:
- WO-A1-2009/129982
- AU-B2- 424 504
- DE-A1- 19 712 430
- DE-U1- 8 536 797
- FR-A1- 2 333 431
- US-A- 4 779 765

## Beschreibung

Die vorliegende Erfindung betrifft eine Reihensämaschine umfassend zumindest eine Reihe von Ausbringelementen, vorzugsweise in Form von Säscharen, von denen zumindest einigen von einem Speicherraum her auszubringendes Gut zuführbar ist, wobei der genannte Speicherraum über zumindest eine Speiseleitung mit zumindest einem Verteilerkopf verbunden ist, von dem aus Verteilerleitungen zu den Ausbringelementen führen.

Mit derartigen Reihensä- oder Drillmaschinen kann Saatgut in definierten Reihen, die voneinander beabstandet sind, ausgebracht werden, wobei eine Unterflurausbringung des Saatguts erfolgen kann. Hierzu können die in Reihen angeordneten Ausbringelemente Scharelemente beispielsweise in Form von Scharscheiben umfassen, die eine Säfurche in den Boden einbringen, in der das Saatgut dann abgelegt wird. Typischerweise können derartige Reihensämaschinen den Ausbringelementen vorgeschaltete oder nachgeschaltete Bodenbearbeitungsaggregate wie Auflockerungselemente, die üblicherweise vorauslaufend angeordnet werden, oder Walzelemente und Zustreicher aufweisen, die üblicherweise nachlaufend angeordnet werden.

Das auszubringende Gut wird hierbei aus dem Speicherraum zunächst in einen Verteilerkopf geführt, in dem sich das auszubringende Gut verteilt und über eine Vielzahl von Verteilerleitungen den Ausbringelementen zugeführt wird. Hierbei kann mit einem Luftstromförderer gearbeitet werden, der das auszubringende Gut von dem Speicherraum in den Verteilerraum fördert und/oder von dem Verteilerraum zu den Ausbringelementen fördert. Oftmals wird das Gut aus dem Speicherraum pneumatisch von unten her zentral in den Verteilerkopf geblasen bzw. gefördert, um in dem Verteilerkopf ebenfalls durch den Luftstrom unterstützt die gewünschte Kornverteilung auf die verschiedenen Verteilerleitungen zu erreichen.

Derartige Reihensämaschinen sind beispielsweise aus den Schriften EP 13 42 400 B1, WO 03/071856 A1 oder DE 10 2007 024 464 A1 bekannt.

Üblicherweise wird mit derartigen Reihensämaschinen Getreidesaatgut wie Weizen oder Hafer ausgebracht. Es wird jedoch auch gewünscht, mit solchen pneumatischen Reihensämaschinen auch Reihenkulturen wie Mais, Sonnenblumen und Soja auszubringen, um für dieses spezielle Saatgut keine zusätzlichen Spezialmaschinen kaufen zu müssen. Hierbei sollen nicht nur große Reihenabstände beispielsweise im Bereich von 60 bis 75 cm, sondern auch Engreihensaaten mit Reihenabständen von beispielsweise 37,5 bis 50 cm realisiert werden können. Die genannten Engreihensaaten ergeben gerade im Häckselsilagebereich höhere Erträge, geringeren Unkrautdruck und geringeres Erosionsrisiko.

Allerdings wird bei Verwendung herkömmlicher Drillmaschinen bei der Aussaat von Mais, Sonnenblumen und Soja in Drillsaat eine nur unbefriedigende Längsverteilung der Saatgutkörner in den Reihen erzielt. Einerseits kann es zu Mehrfachbelegungen kommen, andererseits entstehen auch wiederum zu große Lücken, da über die pneumatische Drillsaat die Ablegeabstände nicht exakt gesteuert werden können. Für Anwendungen, bei denen solche Unzulänglichkeiten der Längsverteilung nicht akzeptabel sind, wurden daher bislang Einzelkornsämaschinen verwendet, die die auszubringenden Körner in einem vorgebbaren Takt vereinzeln und daher in einem besser steuerbaren Abstand ablegen können. Derartige Einzelkornsämaschinen sind beispielsweise aus den Schriften DE 10 2008 007 614 A1 oder EP 22 10 464 A1 bekannt.

Aus den Schriften WO 2009/129982 A1 und DE 19712430 A1 sind ferner jeweils pneumatische Direktsähmaschinen bekannt, die zwei separate Speicherbehälter aufweisen, um Saatgut und Dünger gleichzeitig auszubringen, wobei jeder der Speicherbehälter über ein zentrales Steigrohr mit einem pneumatischen Verteilerkopf verbunden ist, von dem das Saatgut bzw. der Dünger über eine Vielzahl von Verteilerleitungen zu den Ausbringelementen gebracht wird.

Der vorliegenden Erfindung liegt die Aufgabe zugrunde, eine verbesserte Reihensämaschine der eingangs genannten Art zu schaffen, die Nachteile des Standes der Technik vermeidet und Letzteren in vorteilhafter Weise weiterbildet. Insbesondere soll eine Reihensämaschine geschaffen werden, die gleichermaßen das Ausbringen von klassischem Drillsaatgut mit engsten Reihenabständen und hohen Ausbringleistungen als auch das Ausbringen von Mais, Sonnenblumen und Soja mit hochwertiger Längsverteilung der Körner ermöglicht.

Erfindungsgemäß wird diese Aufgabe durch eine Reihensämaschine gemäß Anspruch 1 gelöst. Bevorzugte Ausgestaltungen der Erfindung sind Gegenstand der abhängigen Ansprüche.

Es wird also vorgeschlagen, an einer Reihensämaschine verschiedene Kornausbringungen, insbesondere in Drillsaat und Einzelkornsaat, miteinander zu kombinieren. Über verschiedene Zuführ- bzw. Ausbringsysteme können wahlweise Güter wie Mais, Sonnenblumen oder Soja in definierter Längsverteilung zusammen mit Dünger ausgebracht werden oder auch über nur ein Ausbringsystem andere Güter wie Weizen oder Hafer ausgebracht werden. Insbesondere kann die kombinierte Ausbringung von Dünger und Saatgut vorgesehen werden, wobei das Saatgut vereinzelt wird und der Dünger durch Einsätze in den Verteilerkopf nur an den unmittelbar neben den Saatgutreihen benachbarten Reihen ausgebracht wird. Erfindungsgemäß besitzt die Reihensämaschine zusätzlich zu dem mit dem Verteilerkopf verbundenen Speicherraum einen weiteren, separaten Speicherraum, der über Zufuhrleitungen mit zumindest einigen der Ausbringelementen verbunden ist, so dass an zumindest einigen und/oder benachbarten Ausbringelementen wahlweise nacheinander oder gleichzeitig unterschiedliche Güter aus separaten Speicherräumen ausbringbar sind. Insbesondere kann aus dem mit dem Verteilerkopf verbundenen Speicherraum Dünger ausgebracht werden, während aus dem zusätzlichen, separaten Speicherraum Saatgut wie Mais, Soja oder Sonnenblumen ausgebracht wird, wobei vorteilhafterweise Dünger- und Saatgutaustrag gleichzeitig erfolgen kann. Soll andererseits bezüglich der Längsverteilung unkritisches Saatgut wie Getreide beispielsweise in Form von Weizen ausgebracht werden, kann dies über den mit dem Verteilerkopf verbundenen Speicherraum in Drillsaat erfolgen, der bei der Ausbringung von Mais, Soja oder Sonnenblumen für den Dünger genutzt wird. Hierdurch kann auf separate Sämaschinen für die verschiedenen Saatgüter verzichtet werden. Gleichzeitig wird eine kombinierte Ausbringung von Dünger und Saatgut ermöglicht. Wenn nur Drillsaat ausgeführt wird, kann durch Umlegen oder Entfernen von Trennwänden der Speicherraum von Einzelkornsaatgut (Mais, Soja, Sonnenblumen) zusätzlich genutzt werden.

Dabei ist für die Ausbringung des Guts aus dem zusätzlichen Speicherraum eine Kornvereinzelungsvorrichtung vorgesehen, die die auszubringenden Körner vereinzelt und in definierter Längsverteilung ablegt. Diese Kornvereinzelungsvorrichtung kann grundsätzlich verschieden ausgebildet und an verschiedenen Positionen vorgesehen sein. Beispielsweise wäre es denkbar, an den Ausbringelementen, die mit dem zusätzlichen Speicherraum verbunden sind, oder den diese Ausbringelemente mit dem Speicherraum verbindenden Zufuhrleitungen Vereinzelungselemente anzubringen, um die Körner im Bereich der Ausbringelemente oder im Bereich der Zufuhrleitungen zu vereinzeln.

Vorteilhafterweise jedoch ist die Kornvereinzelungsvorrichtung in den zusätzlichen Speicherraum integriert oder unmittelbar an dem genannten zusätzlichen Speicherraum vorgesehen, beispielsweise im Bereich der Anschlüsse der zu den Ausbringelementen führenden Zufuhrleitungen. Durch eine zentrale, dem zusätzlichen Speicherraum zugeordnete Kornvereinzelungsvorrichtung wird nicht nur eine einfache Ansteuerung erreicht, sondern vor allen Dingen auch an den Ausbringelementen Platz geschaffen, so dass im Bereich der Ausbringelemente genügend Platz verbleibt, um in sehr engem Abstand zueinander die Austrittsabschnitte der vom Verteilerkopf her kommenden Leitungen und der vom zusätzlichen Speicherraum her kommenden Leitungen anzubringen, ohne dass es hier zu Kollisionen käme oder zu große Abstände einzuhalten wären. Dies ist insbesondere für die gleichzeitige Ausbringung von Dünger und Saatgut vorteilhaft, da hierdurch der Dünger unmittelbar dort in den Boden eingebracht werden kann, wo das Saatgut abgelegt wird.

Die genannte Kornvereinzelungsvorrichtung kann in Weiterbildung der Erfindung eine vorzugsweise antreibbare Vereinzelungswelle aufweisen, die den Anschlüssen der Zufuhrleitungen an den zusätzlichen Speicherraum zugeordnet sind, beispielsweise unmittelbar vor diesem angeordnet ist. Die genannte Kornvereinzelungswelle kann beispielsweise schneckenförmige Zufuhrelemente aufweisen oder Vereinzelungsbohrungen besitzen, so dass je nach Drehstellung ein einzelnes Korn in die vom zusätzlichen Speicherraum wegführende Zufuhrleitung gegeben wird.

Die Anzahl der mit dem zusätzlichen Speicherraum verbundenen Ausbringelementen und die Anzahl der mit dem Verteilerkopf verbundenen Ausbringelemente können variieren, wobei insbesondere mehr Ausbringelemente mit dem Verteilerkopf verbunden sein können als mit dem zusätzlichen Speicherraum verbunden sind.

Die mit dem zusätzlichen Speicherraum verbundenen Ausbringelemente können gleichzeitig auch mit dem Verteilerkopf verbunden sein, so dass sowohl vom Verteilerkopf her Dünger als auch vom zusätzlichen Speicherraum her Saatgutkörner am selben Ausbringelement ausgebracht werden können. Zusätzlich kann jedoch auch vorgesehen sein, dass für die Ausbringung des Saatguts aus dem zusätzlichen Speicherraum zumindest einige separate Ausbringelemente vorgesehen sind, die nicht mit dem Verteilerkopf verbunden sind bzw. von diesem her nicht bedient werden können. Um Dünger in unmittelbarer Nähe der dort abgelegten Saatgutkörner auszubringen zu können, können unmittelbar benachbarte Ausbringelemente mit dem genannten Verteilerkopf verbunden sein bzw. von diesem her bedient werden.

Um die Saatgutausbringung über den Verteilerkopf variabel an die verschiedenen Anwendungsfälle anpassen zu können, kann dem Verteilerkopf in Weiterbildung der Erfindung eine Absperrvorrichtung zur Absperrung zumindest einer Verteilerleitung zugeordnet sein, die zu einem von dem zusätzlichen Speicherraum her unbedienten Ausbringelement führt bzw. zu einem Ausbringelement führt, das nicht mit einem vom zusätzlichen Speicherraum her bedienten Ausbringelement benachbart ist. Durch eine solche Absperrvorrichtung können insbesondere all die Ausbringelemente gesperrt werden, die nicht benötigt werden, wenn über den Verteilerkopf Dünger und über den zusätzlichen Speicherraum Saatgut wie Mais, Soja oder Sonnenblumen ausgebracht werden. Alternativ oder zusätzlich kann die wahlweise Absperrung zumindest einiger Verteilerleitungen auch dazu genutzt werden, im reinen Drillsaatbetrieb einige Ausbringelemente abzusperren, beispielsweise um die Reihenabstände zu vergrößern oder Fahrgassen einzubringen.

Die Absperrvorrichtung ist hierbei vorteilhafterweise zwischen einem absperrenden und einem freigebenden Zustand schaltbar ausgebildet. Hierzu können insbesondere zumindest abschnittsweise bewegbare Absperrelemente Verwendung finden, beispielsweise in Form von Absperrschiebern, Absperrklappen oder dergleichen.

Vorteilhafterweise kann die Absperrvorrichtung in den Verteilerkopf bewegbare und aus dem Verteilerkopf herausbewegbare Blockierelemente vorzugsweise in Form von Ablenkkeilen umfassen, die vor die abzusperrenden Verteilerleitungen in den Verteilerkopf gesetzt werden können. Solche Umlenkkeile bzw. Ablenkkeile leiten insbesondere bei pneumatisch arbeitenden Verteilerköpfen den Luftstrom gleichmäßig ab, so dass Unregelmäßigkeiten in der Verteilung über die noch offen bleibenden Verteilerleitungen vermieden werden können.

In Weiterbildung der Erfindung besitzen die von dem zusätzlichen Speicherraum zu den Ausbringelementen führenden Zufuhrleitungen und die vom Verteilerkopf zu den Ausbringelementen führenden Verteilerleitungen separate Mündungsabschnitte und/oder separate Ablegeteile, die beispielsweise rechts und links an derselben Scharscheibe angeordnet oder separaten, vorzugsweise nebeneinander liegenden, Scharscheiben angeordnet sein können.

Um eine gleichmäßig, effiziente und von äußeren Einflüssen wie Hangneigung, fahrdynamischen Stößen und dergleichen unbeeinträchtigte Gutförderung zu erreichen, kann in Weiterbildung der Erfindung eine Luftstromfördervorrichtung zur Förderung der auszubringenden Güter vorgesehen sein. Insbesondere kann eine solche pneumatische Fördervorrichtung nicht nur dem Ausbringsystem, das mit dem genannten Verteilerkopf arbeitet, zugeordnet sein, sondern auch für das Ausbringsystem vorgesehen sein, das von dem separaten zusätzlichen Speicherraum das dort gespeicherte Gut über die Zufuhrleitungen zu den Ausbringelementen ausbringt. Insbesondere kann das auszubringende Gut in den vom zusätzlichen Speicherraum zu den jeweiligen Ausbringelementen führenden Zufuhrleitungen dort im Luftstrom bzw. pneumatisch gefördert werden.

Die vorliegende Erfindung wird nachfolgend anhand eines bevorzugten Ausführungsbeispiels und zugehöriger Zeichnungen näher erläutert. In den Zeichnungen zeigen:

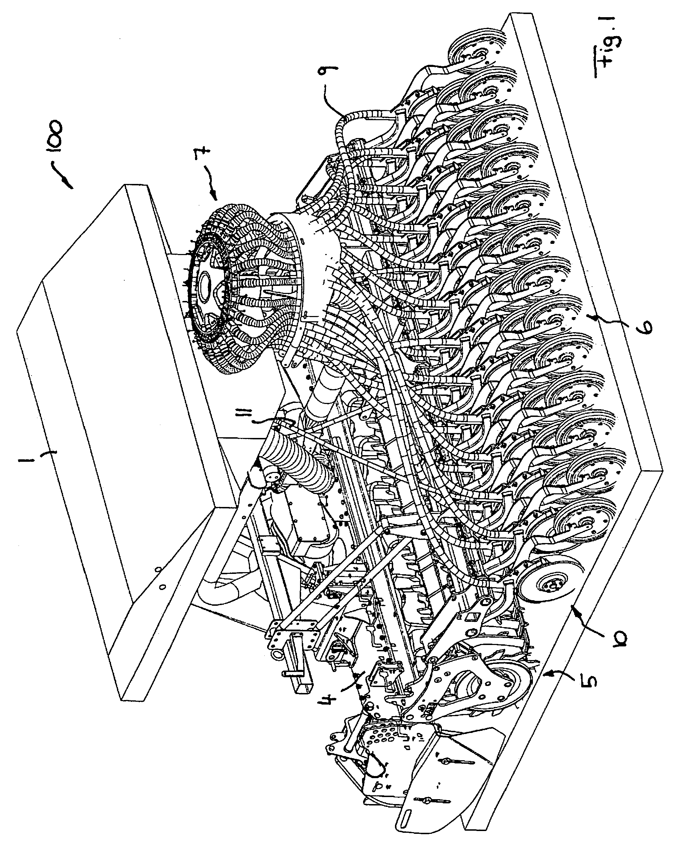

- Fig. 1:: eine schematische, perspektivische Darstellung einer Reihensämaschine nach einer vorteilhaften Ausführung der Erfindung, wobei mehrere Reihen von Säscharen gezeigt sind, die von einem Verteilerkopf her beschickbar sind und teilweise von einem separaten Speicherraum her beschickbar sind,
- Fig. 2:: eine Seitenansicht der Reihensämaschine aus Fig. 1, die die Anordnung des Verteilerkopfes und dessen Anbindung einerseits an den Speicherraum und andererseits an die Säschare zeigt, sowie weiterhin zeigt, dass einige der Säschare über separate Zufuhrleitungen an dem Verteilerkopf vorbei von einem separaten Speicherraum des Saatguttanks her beschickbar sind, und
- Fig. 3:: eine Draufsicht auf die Reihensämaschine aus Fig. 1, die die Verteilung der Säschare und deren Anbindung an den Verteilerkopf bzw. den separaten Speicherraum zeigt.

Wie in den Figuren gezeigt, kann die Reihensämaschine 100 als Anbaugerät ausgeführt sein, das in an sich bekannter Weise über einen Anbaubock 16 in an sich bekannter Weise beispielsweise mittels einer Dreipunktanlenkung an einen nicht gezeigten Schlepper anbaubar ist. Die Reihensämaschine 100 kann einen mehrgliedrigen Maschinenrahmen 17 umfassen, der einerseits einen Tank 1 zur Speicherung von Saatgut oder anderem auszubringendem Gut wie Dünger trägt und andererseits der Aufhängung diverser Bodenbearbeitungsaggregate dient. Wie die gezeichnete Ausführung zeigt, können zusätzlich zu den Ausbringelementen 10, über die das auszubringende Gut am Boden abgelegt wird, vorauslaufende Bodenaggregate 5 beispielsweise in Form eines Grubbers, einer Scheibenegge oder anderer den Boden vorbereitender Bodenbearbeitungswerkzeuge und/oder nachlaufende Bodenbearbeitungsaggregate 6 beispielsweise in Form von Andruckwalzen, Zustreichern oder dergleichen vorgesehen sein.

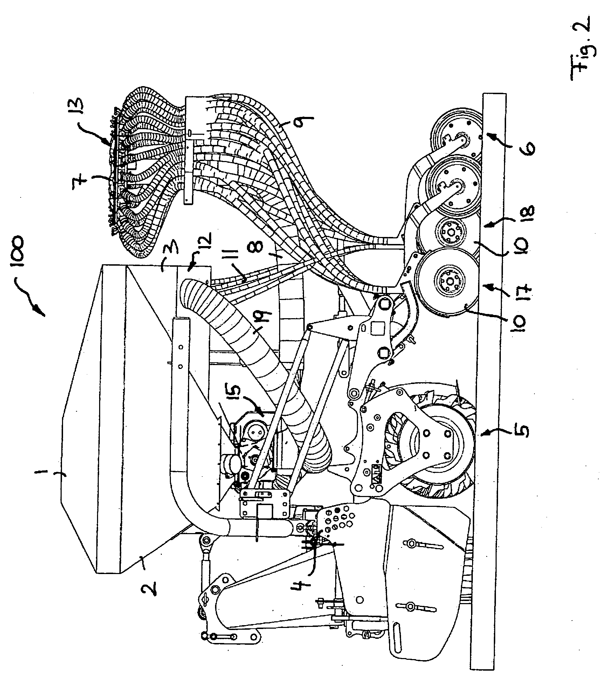

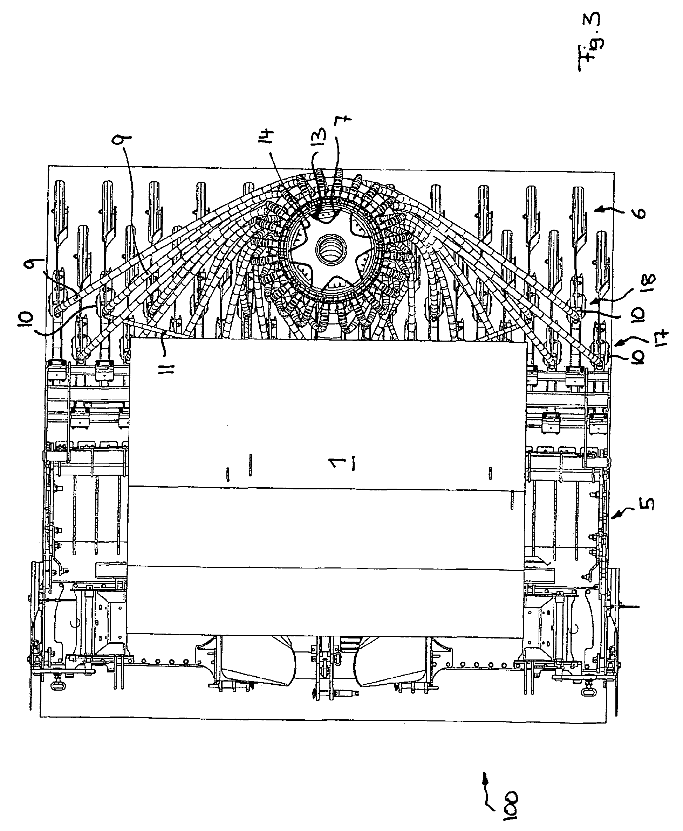

Die genannten Ausbringelemente 10 können als Säschare beispielsweise in Form von Scheibenscharen ausgebildet sein, die um liegende Querachsen drehbare Scheiben umfassen, mittels derer eine Ablagefurche in den Boden gezogen wird. Die genannten Ausbringelemente 10 können in zumindest einer Reihe quer zur Fahrtrichtung voneinander beabstandet angeordnet sein, wobei in der gezeichneten Ausführungsform zwei Reihen 17 und 18 von Ausbringelementen 10 vorgesehen sind. In alternativer Ausbildung der Erfindung könnten auch mehr als zwei Reihen von Ausbringelementen vorgesehen sein. Die genannten Reihen 17 und 18 sind hierbei in Fahrtrichtung hintereinander versetzt angeordnet, vgl. Fig. 2, wobei die in verschiedenen Reihen 17 und 18 vorgesehenen Ausbringelemente 10 auch quer zur Fahrtrichtung spurversetzt angeordnet sind, vgl. Fig. 3, so dass ein Säschar in der vorderen Reihe eine Saatfurche benachbart zu der von einem Säschar der hinteren Reihe gezogenen Saatfurche liegt. Diesbezüglich sind jedoch auch andere Ausführungen und Gruppierungen mit anderem Versatz zueinander möglich.

Die genannten Ausbringelemente 10 werden von einem Verteilerkopf 7 her mit auszubringendem Gut beschickt, wobei der genannte Verteilerkopf 7 über eine Vielzahl von Verteilerleitungen 9 mit den Ausbringelementen 10 verbunden ist. Die genannten Verteilerleitungen 9 münden an den Ausbringelementen 10 in Form von Särohrstutzen oder anderen Ausbringelementen, um das auszubringende Gut in die von dem Säschar gezogene Saatfurche abzulegen.

Die genannten Verteilerleitungen 9 gehen von dem Verteilerraum des Verteilerkopfes 7 ab, über dessen Umfang die Anschlüsse der Verteilerleitungen 9 verteilt angeordnet sind, vgl. Fig. 3.

Der genannte Verteilerkopf 7 wird wiederum von einem Speicherraum 2 des Tanks 1 her über eine Speiseleitung 8 mit auszubringendem Gut beschickt, wobei die genannte Speiseleitung 8 zentral von unten her in den Verteilerraum des Verteilerkopfes 7 führen kann. Die Beschickung erfolgt hierbei vorteilhafterweise mit Hilfe einer pneumatischen Fördereinrichtung 15, die das auszubringende Gut im Luftstrom in den Verteilerkopf 7 hineinfördert, dort verteilt und sodann über die Verteilerleitungen 9 zu den Ausbringelementen 10 treibt.

Wie die Figuren zeigen, können einige der Ausbringelemente 10 an dem Verteilerkopf 7 vorbei von einem separaten, zusätzlichen Speicherraum 3 her mit auszubringendem Gut beschickt werden. Der genannte zusätzliche Speicherraum 3 kann separat von dem vorgenannten ersten Speicherraum 2 ausgebildet und zusammen mit diesem in den Tank 1 integriert sein, wobei es jedoch auch möglich wäre, den zusätzlichen Speicherraum 3 gänzlich separat vom Tank 1 auszubilden. Bevorzugt ist jedoch die Anordnung der beiden separaten Speicherräume 2 und 3 in einem gemeinsamen Tank 1.

Der separate Speicherraum 3 ist über Zufuhrleitungen 11 direkt, d.h. an dem Verteilerkopf 7 vorbei mit einigen der Ausbringelemente 10 verbunden, wobei die entsprechenden Ausbringelemente 10 gleichmäßig voneinander beabstandet sein können und beispielsweise in der hinteren Reihe 18 vorgesehen sein können. Die vom separaten Speicherraum 3 her beschickbaren Ausbringelemente 10 besitzen einen deutlich größeren Reihenabstand als die über den Verteilerkopf 7 her beschickbaren Ausbringelemente 10. Beispielsweise können die Zufuhrleitungen 11, die vom zusätzlichen Speicherraum 3 her kommen, an jedem dritten Ausbringelement 10 einer Reihe münden, wobei jedoch je nach gewünschtem Reihenabstand der vom zusätzlichen Speicherraum 3 her vorgenommenen Aussaat auch andere Gruppierungen vorgesehen sein können.

Die genannten Ausbringelemente 10, die vom zusätzlichen Speicherraum 3 her über die Zufuhrleitungen 11 beschickbar sind, können andererseits auch von dem Verteilerkopf 7 her beschickt werden, d.h. an den jeweiligen Ausbringelementen 10 münden einerseits die Zufuhrleitungen 11 vom zusätzlichen Speicherraum 3 her und andererseits die entsprechende Verteilerleitung 9 vom Verteilerkopf 7 her, vgl. Fig. 3. Je nachdem, in welchem Ausbringmodus gearbeitet wird, kann jeweils die entsprechende Zufuhrleitung 11 oder die entsprechende Verteilerleitung 9 abgeschaltet werden.

Die Ausbringung des Gut vom zusätzlichen Speicherraum 3 kann vorteilhafterweise ebenfalls mit Hilfe der pneumatischen Fördereinrichtung 15 erfolgen, die über zumindest eine Luftzufuhrleitung 19 einen Luftstrom in den zusätzlichen Speicherraum 3 fördern kann, der sodann über die Zufuhrleitungen 11 entweichen kann, um die Körner zu den Ausbringelementen 10 mitzunehmen.

Der Körneraustrag aus dem zusätzlichen Speicherraum 3 kann durch eine Kornvereinzelungsvorrichtung 12 exakt gesteuert bzw. dosiert werden. Die genannte Körnerverteilungsvorrichtung 12 kann hierzu vorteilhafterweise in den zusätzlichen Speicherraum 3 integriert sein, beispielsweise eine antreibbare Körnervereinzelungswelle umfassen, die sich über die Anschlüsse der Zufuhrleitungen 11 an den zusätzlichen Speicherraum 3 erstreckt und/oder diesen vorgeschaltet ist, um jeweils in einem gewünschten Takt Körner einzeln in die genannten Zufuhrleitungen 11 einzubringen.

Wie Fig. 2 zeigt, können die Zufuhrleitungen 11 in ihrem Durchmesser an die Einzelkornaussaat angepasst sein, wobei die genannten Zufuhrleitungen 11 insbesondere von ihrem Durchmesser her kleiner dimensioniert sein können als die vom Verteilerkopf 7 her kommenden Verteilerleitungen 9.

Die Reihensämaschine 100 erlaubt es, auszubringendes Gut in verschiedenen Ausbringmodi auszubringen: Zum einen kann in einem ersten Ausbringmodus beispielsweise Getreidesaat nur über den Verteilerkopf 7 ausgebracht werden. In diesem Drillsaatmodus ist die Körnervereinzelungsvorrichtung 12 abgeschaltet, so dass aus dem zusätzlichen Speicherraum 3 kein Gut ausgetragen wird. Im Verteilerkopf 7 sind alle Verteilerleitungen 9 freigeschaltet, so dass auch an den Ausbringelementen 10, an denen die Zufuhrleitungen 11 vom zusätzlichen Speicherraum 3 her münden, Gut über den Verteilerkopf 7 her ausgebracht werden kann. Es müssen natürlich nicht zwangsweise alle Verteilerleitungen 9 freigeschaltet sein. Beispielsweise um Fahrgassen einzubringen oder größere Reihenabstände zu erreichen oder nur eine halbe Arbeitsbreite der Sämaschine zu nutzen, können auch im Drillsaatmodus einzelne oder mehrere der Verteilerleitungen 9 gesperrt sein. Hierzu wird eine vorzugsweise in den Verteilerkopf 7 integrierte Absperrvorrichtung in ihre sperrende Stellung geschaltet, wobei die genannte Absperrvorrichtung 13 entsprechende Blockierelemente 14 beispielsweise in Form von Ablenkkeilen umfassen kann, wie sie beispielsweise per se aus der Schrift DE 10 2007 024 464 A1 bekannt sind.

Andererseits kann in einem Einzelkornsaat-/Düngemodus eine Einzelkornablage in Kombination mit einer Unterflurdüngung erreicht werden. Hierzu wird einerseits geeignetes Saatgut wie beispielsweise Mais, Sonnenblumen oder Soja aus dem zusätzlichen Speicherraum 3 über die daran angeschlossenen Ausbringelemente 10 ausgebracht, wobei hier durch Betrieb der Kornvereinzelungsvorrichtung 12 im Einzelkorn-Ablagebetrieb gearbeitet wird. Zusätzlich zum Inbetriebsetzen der Kornvereinzelungsvorrichtung 12 werden im Verteilerkopf 7 die Verteilerleitungen 9 gesperrt, die für das Ausbringen von Dünger nicht benötigt werden. Dies können einerseits die Verteilerleitungen 9 sein, die an den Ausbringelementen 10 münden, an welchen auch die Zufuhrleitungen 11 vom zusätzlichen Speicherraum 3 her münden. Zum anderen können Verteilerleitungen 9 gesperrt werden, die zu Ausbringelemente 10 führen, welche nicht unmittelbar benachbart zu den für die Einzelkornablage benutzten Ausbringelementen 10 sind oder von Letzteren zu weit beabstandet sind, da vorteilhafterweise die Ausbringung des Düngers in der Nähe der Einzelkornablage, insbesondere in benachbarten Aussaatfurchen erfolgt. Zur Sperrung der nicht benötigten bzw. nicht gewünschten Verteilerleitungen 9 können wiederum in der vorgenannten Weise entsprechende Blockierelemente 14 im Verteilerkopf 7 eingebracht bzw. aktiviert werden.

Weiterhin wäre es auch möglich, die Reihensämaschine 100 in einem reinen Einzelkorn-Ablagemodus zu betreiben, d.h. auf die Ausbringung des Düngers über den Verteilerkopf 7 gänzlich zu verzichten.

## Patentansprüche

1. Reihensämaschine umfassend zumindest eine Reihe von Ausbringelementen (10), vorzugsweise in Form von Säscharen, von denen zumindest einigen von einem Speicherraum (2) her auszubringendes Gut zuführbar ist, wobei der Speicherraum (2) über zumindest eine Speiseleitung (8) mit zumindest einem Verteilerkopf (7) verbunden ist, von dem aus Verteilerleitungen (9) zu den Ausbringelementen (10) führen, wobei ein zusätzlicher, separater Speicherraum (3) vorgesehen ist, der über Zufuhrleitungen (11) mit zumindest einigen der Ausbringelemente (10) verbunden ist, **dadurch gekennzeichnet, dass** eine Körnervereinzelungsvorrichtung (12) zur Vereinzelung der aus dem zusätzlichen, separaten Speicherraum (3) auszubringenden Körner vorgesehen ist, wobei an den zumindest einigen Ausbringelementen (10) sowohl die Zuführleitungen (11) vom zusätzlichen, separaten Speicherraum (3) her als auch die Verteilerleitungen (9) vom Verteilerkopf (7) her münden, so dass an den zumindest einigen Ausbringelementen wahlweise nacheinander oder gleichzeitig Güter in Einzelkornablage aus dem zusätzlichen, separaten Speicherraum (3) und in Drillsaat aus dem Speicherraum (2) ausbringbar sind.

2. Reihensämaschine nach dem vorhergehenden Anspruch, wobei die Körnervereinzelungsvorrichtung (12) in dem zusätzlichen, separaten Speicherraum (3) integriert oder zentral an diesem zusätzlichen Speicherraum (3) vorgesehen ist.

3. Reihensämaschine nach einem der beiden vorhergehenden Ansprüche, wobei die Kornvereinzelungsvorrichtung (12) eine den Anschlüssen der Zufuhrleitungen (11) an den zusätzlichen, separaten Speicherraum (3) zugeordnete, vorzugsweise antreibbare, Vereinzelungswelle aufweist.

4. Reihensämaschine nach einem der vorhergehenden Ansprüche, wobei zumindest einem Ausbringelement (10) nur von dem Verteilerkopf (7) her auszubringendes Gut zuführbar ist und/oder mehr Ausbringelemente (10) mit dem Verteilerkopf verbunden sind als mit dem zusätzlichen, separaten Speicherraum (3) verbunden sind.

5. Reihensämaschine nach einem der vorhergehenden Ansprüche, wobei dem Verteilerkopf (7) eine zwischen absperrendem und freigebendem Zustand schaltbare Absperrvorrichtung (13) zur Absperrung zumindest einer Verteilerleitung (9), die zu einem von dem zusätzlichen, separaten Speicherraum (3) her unbedienten Ausbringelement und/oder einem Ausbringelement, das mit den vom zusätzlichen, separaten Speicherraum (3) her bedienten Ausbringelementen nicht benachbart ist, führt, vorgesehen ist.

6. Reihensämaschine nach dem vorhergehenden Anspruch, wobei die Absperrvorrichtung (13) in den Verteilerkopf (7) bewegbare und aus dem Verteilerkopf (7) herausbewegbare Blockierelemente (14), vorzugsweise in Form von Ablenkkeilen, umfasst.

7. Reihensämaschine nach einem der vorhergehenden Ansprüche, wobei die von dem zusätzlichen, separaten Speicherraum (3) zu den zugehörigen Ausbringelementen (10) führenden Zufuhrleitungen (11) und die vom Verteilerkopf (7) zu den zugehörigen Ausbringelementen (10) führenden Verteilerleitungen (9) separate Mündungs- und/oder Ablegeabschnitte aufweisen, die auf gegenüberliegenden Seiten desselben Ausbringelements oder an unterschiedlichen, vorzugsweise benachbarten Ausbringelementen angeordnet sind.

8. Reihensämaschine nach einem der vorhergehenden Ansprüche, wobei den Zufuhrleitungen (11), die von dem zusätzlichen, separaten Speicherraum (7) zu den zugehörigen Ausbringelementen (10) führen, eine pneumatische Fördereinrichtung zur Förderung der auszubringenden Güter im Luftstrom zugeordnet ist.

9. Reihensämaschine nach einem der vorhergehenden Ansprüche, wobei den Verteilerleitungen (9), die von dem Verteilerkopf (7) zu den zugehörigen Ausbringelementen (10) führen, die genannte oder eine andere pneumatische Fördervorrichtung (15) zur Förderung der auszubringenden Güter im Luftstrom zugeordnet ist.

10. Reihensämaschine nach einem der vorhergehenden Ansprüche, wobei der zusätzliche, separate Speicherraum (3) als Saatkornspeicher vorzugsweise für Mais-, Sonnenblumen- und/oder Sojasaatgutkörner, ausgebildet ist und der mit dem Verteilerkopf (7) verbundene Speicherraum (2) als Düngerspeicher, vorzugsweise als Dünger- und Getreidesaatgutspeicher, ausgebildet ist.

11. Reihensämaschine nach einem der vorhergehenden Ansprüche, wobei der zusätzliche, separate Speicherraum (3) und der Speicherraum (2) durch Entfernen und/oder Umlegen einer Trennwand miteinander verbindbar sind derart, dass zum Drillen von normalem Saatgut wie Weizen oder Hafer durch Umlegen oder Entfernen der Trennwände der zusätzliche, separate Speicherraum der Vereinzelungsaggregate zusätzlich für die Drillsaat nutzbar ist.

## Claims

1. A row sowing machine comprising at least one row of application elements (10), preferably in the form of sowing coulters, to at least some of which stock to be applied can be supplied from a storage space (2), wherein the storage space (2) is connected with at least one distributor head (7) via at least one feed line (8), from which distributor head distributor lines (9) lead to the application elements (10), wherein an additional, separate storage space (3) is provided, which is connected with at least some of the application elements (10) via supply lines (11), **characterized in that** a grain singling device (12) for singling the grains to be applied from the additional separate storage space (3) is provided, with both the supply lines (11) from the additional separate storage space (3) and the distributor lines (9) from the distributor head (7) opening at the at least some application elements (10) so that stock can selectively be applied successively or simultaneously at the at least some application elements in single-grain deposition from the additional separate storage space (3) and in drill seed deposition from the storage space (3).

2. The row sowing machine according to the preceding claim, wherein the grain singling device (12) is integrated into the additional separate storage space (3) or is provided centrally at this additional storage space (3).

3. The row sowing machine according to any of the two preceding claims,
wherein the grain singling device (12) includes a preferably drivable singling shaft associated to the connections of the supply lines (11) to the additional separate storage space (3).

4. The row sowing machine according to any of the preceding claims, wherein to at least one application element (10) stock to be applied can be supplied only from the distributor head (7) and/or more application elements (10) are connected with the distributor head than with the additional separate storage space (3).

5. The row sowing machine according to any of the preceding claims, wherein for the distributor head (7) a shut-off device (13) switchable between a blocking and a clearing condition is provided for shutting off at least one distributor line (9) which leads to an application element not operated from the additional separate storage space (3) and/or to an application element which is not adjacent to the application elements operated from the additional storage space (3).

6. The row sowing machine according to the preceding claim, wherein the shut-off device (13) comprises blocking elements (14), preferably in the form of deflection wedges, which are movable into the distributor head (7) and movable out of the distributor head (7).

7. The row sowing machine according to any of the preceding claims, wherein the supply lines (11) leading from the additional separate storage space (3) to the associated application elements (10) and the distributor lines (9) leading from the distributor head (7) to the associated application elements (10) include separate orifice and/or deposition portions which are arranged on opposite sides of the same application element or on different, preferably adjacent application elements.

8. The row sowing machine according to any of the preceding claims, wherein to the supply lines (11), which lead from the additional storage space (7) to the associated application elements (10), a pneumatic conveying means is associated for conveying the stocks to be applied in the air stream.

9. The row sowing machine according to any of the preceding claims, wherein to the distributor lines (9), which lead from the distributor head (7) to the associated application elements (10), the said or another pneumatic conveying device (15) is associated for conveying the stocks to be applied in the air stream.

10. The row sowing machine according to any of the preceding claims, wherein the additional separate storage space (3) is formed as seed grain store, preferably for corn, sunflower and/or soybean seed grains, and the storage space (2) connected with the distributor head (7) is formed as fertilizer store, preferably as fertilizer and cereal seed store.

11. The row sowing machine according to any of the preceding claims, wherein the additional separate storage space (3) and the storage space (2) are connectable with each other by removing and/or folding over a partition wall such that for drilling normal seed stock such as wheat or oat the additional storage space of the singling units additionally is usable for the drill seeds by folding over or removing the partition walls.

## Revendications

1. Semoir en lignes comprenant au moins une rangée d'éléments de mise en terre (10), de préférence sous la forme de socs de semoir, des produits à mettre en terre pouvant être alimentés dans au moins quelques-uns de ceux-ci depuis un espace réservoir (2), l'espace réservoir (2) étant relié à au moins une tête de répartition (7) par le biais d'au moins une conduite d'alimentation (8), des conduites de répartition (9) conduisant de la tête de répartition aux éléments de mise en terre (10), un espace réservoir (3) supplémentaire séparé étant prévu, qui est relié par des conduites d'amenée (11) à au moins quelques-uns des éléments de mise en terre (10), **caractérisé en ce qu'**un dispositif de séparation des grains (12) est prévu pour séparer les grains à mettre en terre depuis l'espace réservoir (3) supplémentaire séparé, dans lequel aussi bien les conduites d'amenée (11) provenant de l'espace réservoir (3) supplémentaire séparé que les conduites de répartition (9) provenant de la tête de répartition (7) débouchent sur les au moins quelques éléments de mise en terre (10), de telle sorte que, au niveau des au moins quelques éléments de mise en terre, des produits peuvent être mis en terre au choix successivement ou simultanément en distribution monograins depuis l'espace réservoir (3) supplémentaire séparé ou semés en lignes depuis l'espace réservoir (2).

2. Semoir en lignes selon la revendication précédente, dans lequel le dispositif de séparation des grains (12) est intégré dans l'espace réservoir (3) supplémentaire séparé ou il est prévu de manière centrale sur cet espace réservoir (3) supplémentaire.

3. Semoir en lignes selon l'une des deux revendications précédentes, dans lequel le dispositif de séparation des grains (12) comporte un arbre de séparation, qui peut être de préférence entraîné, associé aux raccordements des conduites d'amenée (11) à l'espace réservoir (3) supplémentaire séparé.

4. Semoir en lignes selon l'une des revendications précédentes, dans lequel des produits à mettre en terre uniquement par la tête de répartition (7) peuvent être alimentés au moins dans un élément de mise en terre (10) et/ou il y a plus d'éléments de mise en terre (10) qui sont reliés à la tête de répartition qu'à l'espace réservoir (3) supplémentaire séparé.

5. Semoir en lignes selon l'une des revendications précédentes, dans lequel un dispositif de fermeture (13) commutable entre un état de fermeture et un état de libération est prévu sur la tête de répartition (7) pour fermer au moins une conduite de répartition (9), qui conduit à un élément de mise en terre non desservi par l'espace réservoir (3) supplémentaire séparé et/ou un à élément de mise en terre, qui n'est pas adjacent aux éléments de mise en terre desservis par l'espace réservoir (3) supplémentaire séparé.

6. Semoir en lignes selon la revendication précédente, dans lequel le dispositif de fermeture (13) comprend des éléments de blocage (14), de préférence sous la forme de coins de déviation, mobiles dans la tête de répartition (7) et déplaçables hors de la tête de répartition (7).

7. Semoir en lignes selon l'une des revendications précédentes, dans lequel les conduites d'amenée (11) conduisant de l'espace réservoir (3) supplémentaire séparé aux éléments de mise en terre (10) associés et les conduites de répartition (9) conduisant de la tête de répartition (7) aux éléments de mise en terre (10) associés comportent des sections d'ouverture et/ou de dépôt séparées, qui sont disposées sur des côtés opposés du même élément de mise en terre ou sur des éléments de mise en terre différents, de préférence voisins.

8. Semoir en lignes selon l'une des revendications précédentes, dans lequel un moyen de transport pneumatique est associé aux conduites d'amenée (11) qui conduisent de l'espace réservoir (7) supplémentaire séparé aux éléments de mise en terre (10) associés, pour transporter les produits à mettre en terre dans un courant d'air.

9. Semoir en lignes selon l'une des revendications précédentes, dans lequel ledit moyen de transport pneumatique (15) ou un autre est associé aux conduites de répartition (9), qui conduisent de la tête de répartition (7) aux éléments de mise en terre (10) associés, pour transporter les produits à mettre en terre dans un courant d'air.

10. Semoir en lignes selon l'une des revendications précédentes, dans lequel l'espace réservoir (3) supplémentaire séparé est réalisé sous la forme d'un réservoir à grains de semis de préférence pour les grains de semis de maïs, de tournesol et/ou de soja et l'espace réservoir (2) relié à la tête de répartition (7) est réalisé sous la forme d'un réservoir à engrais, de préférence un réservoir à engrais et à grains de semis de céréales.

11. Semoir en lignes selon l'une des revendications précédentes, dans lequel l'espace réservoir (3) supplémentaire séparé et l'espace réservoir (2) peuvent être reliés l'un à l'autre en retirant et/ou déplaçant une paroi de séparation de telle manière que pour semer en lignes des semis conventionnels tels que du blé ou de l'avoine, l'espace réservoir supplémentaire séparé des groupes de séparation des grains est utilisable en déplaçant ou retirant les parois de séparation en plus pour la semence en lignes.
